# FASCICULE DE BREVET EUROPEEN

(11) **EP 0 890 431 B1**
(45) Date de publication et mention de la délivrance du brevet: **19.07.2006**
(21) Numéro de dépôt: 98401635.2
(22) Date de dépôt: 01.07.1998
(51) Int. Cl.: B32B 17/10, C03C 27/12

(54) **Vitrage en verre feuilleté résistant au feu**
Feuerwiderstandsfähiges Verbundglas
Fireproof laminated glazing

(30) Priorité: 09.07.1997 DE 19729336
(43) Date de publication de la demande: 13.01.1999
(73) Titulaire: Vetrotech Saint Gobain (International) AG, 6318 Walchwill (CH)
(72) Inventeur: Gelderie, Udo, 52222 Stolberg (DE); Frommelt, Simon, 42781 Haan (DE)
(74) Mandataire: Muller, René

(56) Documents cités:
- EP-A- 0 219 801
- EP-A- 0 494 538
- EP-A- 0 524 418

## Description

La présente invention concerne un vitrage en verre feuilleté résistant au feu comprenant une vitre en vitrocéramique résistant aux températures élevées et aux chocs thermiques ayant des surfaces rugueuses diffusant la lumière, qui est unie sur chacune de ses deux faces à une vitre en verre de silicate par des couches intermédiaires transparentes ayant un indice de réfraction correspondant à l'indice de réfraction de la vitre en vitrocéramique.

Un vitrage en verre feuilleté de ce genre est connu de par le document EP-A-0 524 418. La vitre en vitrocéramique a un coefficient de dilatation thermique particulièrement faible et une température de ramollissement relativement élevée et se prête dès lors dans une mesure particulière à l'utilisation comme verre coupe-feu. Les vitres en vitrocéramique sont, en raison de leur coefficient de dilatation thermique extrêmement faible, tellement insensibles aux variations rapides de la température qu'elles résistent même au test dit de l'eau d'extinction au cours duquel un jet d'eau d'extinction est projeté sur une vitre en vitrocéramique chauffée à 800°C.

En raison de leur mode de fabrication, les vitres en vitrocéramique présentent toutefois une surface rugueuse et ne sont pas d'une transparence limpide à cause de leur effet de diffusion de la lumière. Pour pouvoir être néanmoins utilisée comme vitrage coupe-feu transparent sans opération onéreuse de doucissage et de polissage, la vitre en vitrocéramique dans le verre coupe-feu connu est associée optiquement par des couches transparentes de même indice de réfraction à des vitres en verre de silicate transparentes limpides. De cette façon, la rugosité de surface à l'origine de la diffusion de la lumière de la vitre en vitrocéramique ne se manifeste pas.

Les couches intermédiaires transparentes entre la vitre en vitrocéramique et les vitres en verre consistent dans le verre coupe-feu connu du genre décrit ci-dessus en une matière inorganique qui mousse sous l'effet de la chaleur, en particulier en silicate de sodium hydraté. Ces couches intermédiaires de silicate de sodium sont confectionnées en coulant et séchant sur les deux vitres en verre de silicate le silicate de sodium sous une forme propre à la coulée contenant 30 à 34% en poids d'eau et en unissant les vitres en verre revêtues ensuite avec la vitre en vitrocéramique à l'autoclave sous l'effet de la chaleur et de la pression.

Les verres coupe-feu de ce genre ont de très bonnes propriétés anti-incendie. Ils n'ont toutefois pas de propriétés de verre de sécurité dans le sens d'une sécurité contre les blessures par éclats lors d'une rupture du vitrage coupe-feu, par exemple, lors de la chute d'une personne dans un vitrage coupe-feu de ce genre. La couche intermédiaire en silicate de sodium ne possède en effet comme telle pas de propriétés de fixation des éclats comme les couches intermédiaires de polymère utilisées d'habitude pour le verre feuilleté de sécurité. Dans de nombreux cas, il est cependant souhaitable que les verres coupe-feu présentent en plus de leurs propriétés anti-incendie aussi des propriétés de verre de sécurité, c'est-à-dire évitant les graves blessures par éclats lors d'un contact du corps avec le verre coupe-feu fragmenté.

De surcroît, dans le verre coupe-feu connu, les vitres en verre de silicate extérieures se rompent sous une sollicitation mécanique par choc en gros fragments présentant des arêtes acérées. De plus, tant les deux vitres en verre que la vitre en vitrocéramique n'ont qu'une résistance à la rupture en flexion relativement faible, ce qui se traduit défavorablement aussi dans les propriétés de verre de sécurité du fait qu'elles se rompent facilement lors d'une vive sollicitation par choc.

L'art antérieur connaît par ailleurs de la demande de brevet européen N° EP 494 538 un vitrage en verre correspondant au préambule de la revendication N° 1.
L'invention a pour but de développer, en utilisant une vitre en vitrocéramique, un verre coupe-feu qui présente, outre une haute résistance au feu, une solidité mécanique accrue et des propriétés de verre de sécurité contre les blessures par éclats. Conformément à l'invention, ce but est atteint par le vitrage selon la revendication N° 1. Les couches intermédiaires transparentes entre la vitre en vitrocéramique et les vitres en verre de silicate contiguës consistent ainsi en un polymère thermoplastique à haut effet de fixation des éclats et les vitres en verre de silicate sont trempées par voie thermique.

Les vitrages en verre trempé ont en tant que tel l'avantage de présenter, en conséquence de leurs précontraintes de compression dans leurs couches superficielles et dans le domaine périphérique, une résistance à la traction fortement accrue dans le domaine périphérique et, dans l'ensemble, une résistance à la flexion sensiblement plus élevée que les vitrages en verre normaux, c'est-à-dire non trempés. La forte précontrainte de compression dans le domaine périphérique conduit à ce que les vitrages de verre trempé présentent en cas d'incendie une durabilité sensiblement accrue du fait que les tensions apparaissant dans le domaine périphérique à cause de la différence de température entre la périphérie scellée dans le châssis et la surface du vitrage exposé au feu sont d'abord compensées par les précontraintes en compression de sorte que les vitrages en verre trempé n'arrivent à la rupture que sensiblement plus tard.

Du fait de l'utilisation d'un polymère pour la couche intermédiaire, la protection anti-incendie est, il est vrai, diminuée en comparaison du vitrage coupe-feu connu parce que le pouvoir d'isolation thermique du polymère qui se carbonise est plus faible que le pouvoir d'isolation thermique de la couche de silicate de sodium qui mousse. Cependant, cet inconvénient est par ailleurs compensé au moins pour partie avec la vitre coupe-feu conforme à l'invention par le fait que les couches intermédiaires subsistent dans leur intégralité plus longtemps grâce à la plus longue tenue des vitres en verre trempé. Les vitres en verre non trempé du verre coupe-feu connu, au contraire, tombent normalement après leur fragmentation et entraînent des parties de la couche intermédiaire moussante, de sorte que celle-ci est plus ou moins gravement affaiblie et perd de cette façon son pouvoir d'isolation thermique.

Les avantages particuliers du verre coupe-feu conforme à l'invention consistent en ce qu'il présente, pour des propriétés de résistance au feu comparables, une solidité sensiblement plus grande contre les chocs mécaniques et les sollicitations en flexion et d'autre part aussi des propriétés de verre de sécurité marquées contre les blessures par éclats.

Comme vitres en verre trempé, on peut utiliser, par exemple, des vitres en verre trempé faites de verre flotté commercial. Le verre flotté commercial présente un coefficient de dilatation thermique de > 8,5.10⁻⁶K⁻¹ et, en raison de ce coefficient de dilatation thermique relativement élevé, il peut être trempé à l'aide des installations de trempe habituelles au point de pouvoir atteindre des résistances à la flexion s'élevant jusqu'à 200 N/mm², mesurées suivant DIN 52303 ou EN 12150. De telles vitres en verre flotté trempé se divisent lors de leur fragmentation en petits grains de verre inoffensifs. Par ailleurs, les vitres en verre flotté perdent, cependant, leur stabilité en raison de leur température de ramollissement relativement basse d'environ 730°C, de sorte que l'effet d'isolation thermique de la couche intermédiaire carbonisée se perd lorsque les vitres de verre flotté libèrent par leur ramollissement la couche intermédiaire.

Il est cependant possible d'utiliser des vitres en verre trempé faites de verres qui présentent un coefficient de dilatation thermique α₂₀₋₃₀₀ < 8,5.10⁻⁶K⁻¹, en particulier de 6 à 8,5.10⁻⁶K⁻¹ et un point de ramollissement de 750 à 830°C. Ces verres d'une part peuvent être suffisamment trempés à l'aide des installations de trempe existantes pour présenter les propriétés de verre de sécurité requises et d'autre part ont une température de ramollissement nettement plus élevée, de sorte que leur stabilité est notablement plus longue en cas d'incendie.

Les feuilles de polymère les plus diverses disponibles sur le marché peuvent être utilisées comme couches intermédiaires thermoplastiques pour autant qu'elles présentent l'effet de fixation des éclats requis pour le verre de sécurité. Entrent en particulier en ligne de compte à cet effet les feuilles de polyvinylbutyral (PVB), de polyuréthanne (TPU), de copolymères d'éthylène et d'acétate de vinyle (EVA) ou d'hydrocarbures fluorés (THV). Les feuilles de THV ont en particulier l'avantage qu'elles sont difficilement inflammables. En cas d'incendie, à peu près aucun produit de décomposition inflammable ne se forme avec ces feuilles.

Deux exemples d'exécution sont décrits plus en détail ci-après pour des verres coupe-feu conformes à l'invention.

### EXEMPLE 1

On a fabriqué un vitrage en verre feuilleté ayant des dimensions superficielles de 1,33 x 0,75 m² à partir d'une vitre en vitrocéramique d'une épaisseur de 5 mm (KERALITE de la société KERAGLASS, France), de deux feuilles de verre extérieures chacune d'une épaisseur de 5 mm en verre flotté trempé par voie thermique et de deux feuilles de PVB chacune d'une épaisseur de 0,38 mm suivant un procédé à l'autoclave connu sous les effets de la chaleur et de la pression.

Le vitrage en verre feuilleté a été monté dans un châssis en acier habituel avec un enchâssement de 12 mm et a été introduit dans un four à feu nu dans lequel a été exécutée l'épreuve au feu suivant DIN 4102 ou ISO/DIS 834-1 d'après la courbe dite de température unitaire (ETK).

Après 10 minutes depuis le début de l'épreuve au feu, la feuille de verre tournée vers le côté feu s'est écroulée. Le PVB ainsi libéré a pris feu et s'est décomposé. La vitre en vitrocéramique et la vitre en verre trempé à l'écart du feu ne se sont pas rompues et ont assuré par la suite une étanchéité complète de la chambre du four. Après 45 minutes, l'épreuve au feu a été interrompue. La vitre en vitrocéramique présentait une température de 805°C au terme de l'épreuve au feu. Immédiatement après l'arrêt du brûleur, la vitre coupe-feu a été refroidie brutalement de l'extérieur au moyen d'un fort jet d'eau. La vitre en verre trempé extérieure s'est fragmentée immédiatement. La vitre en vitrocéramique a toutefois résisté au jet d'eau sans se rompre.

### EXEMPLE 2

On a fabriqué un vitrage en verre feuilleté ayant des dimensions superficielles de 1,33 x 0,75 m² à partir des même vitres de verre et d'une vitre en vitrocéramique que dans l'exemple 1 qui ont cependant été unies dans ce cas au moyen de feuilles thermoplastiques d'une épaisseur de 0,5 mm formées d'un copolymère d'hydrocarbure fluoré (produit THV de la société DYNEON, Allemagne) par un procédé à l'autoclave sous les effets de la chaleur et de la pression.

Ce vitrage en verre feuilleté a été à nouveau soumis à l'épreuve au feu dans un four à feu nu comme à l'exemple 1.

Environ 12 minutes après le début de l'épreuve au feu, la vitre en verre trempé tournée vers le feu s'est écroulée, de sorte que la feuille thermoplastique disposée du côté du feu s'est trouvée exposée au feu. La matière de la feuille n'a cependant pas pris feu, mais a subi une lente décomposition thermique. Un dégagement de produits de décomposition gazeux et/ou combustibles du côté extérieur du four dans la région du châssis enserrant le vitrage en verre feuilleté n'a pas pu être observé. L'épreuve au feu a été interrompue après 95 minutes. A ce moment, la vitre en vitrocéramique et la vitre en verre extérieure étaient encore intactes et avaient atteint entre-temps une température de 830°C.

Immédiatement après l'arrêt du brûleur, la vitre coupe-feu a été refroidie brutalement du côté extérieur au moyen d'un jet d'eau d'extinction. La vitre en verre extérieure s'est alors rompue immédiatement. La vitre en vitrocéramique a toutefois résisté au jet d'eau sans se rompre et a dès lors assuré une obturation intacte de la chambre.

## Revendications

1. Vitrage en verre feuilleté résistant au feu comprenant une vitre en vitrocéramique résistant aux températures élevées, qui est unie sur chacune de ses deux faces à une vitre en verre de silicate par des couches intermédiaires transparentes, **caractérisé en ce que** la vitre en vitrocéramique ayant des surfaces rugueuses diffusant la lumière les couches intermédiaires transparentes entre la vitre en vitrocéramique et les vitres en verre de silicate contiguës consistent en un polymère thermoplastique à haut effet de fixation des éclats ayant un indice de réfraction correspondant à l'indice de réfraction de la vitre en vitrocéramique et **en ce que** les vitres en verre de silicate sont trempées par voie thermique.

2. Vitrage en verre feuilleté résistant au feu suivant la revendication 1, **caractérisé en ce que** les vitres en verre de silicate trempé par voie thermique consistent en verre flotté commercial ayant un coefficient de dilatation thermique de > 8,5.10⁻⁶K⁻¹ et une température de ramollissement d'environ 730°C.

3. Vitrage en verre feuilleté résistant au feu suivant la revendication 1, **caractérisé en ce que** les vitres en verre trempé par voie thermique consistent en verres ayant un coefficient de dilatation thermique a₂₀₋₃₀₀ de 6 à 8,5.10⁻⁶K⁻¹ et une température de ramollissement de 750 à 830°C.

4. Vitrage en verre feuilleté résistant au feu suivant l'une quelconque des revendications 1 à 3, **caractérisé en ce que** les couches intermédiaires thermoplastiques consistent en polyvinylbutyral, en polyuréthanne, en copolymères d'éthylène et d'acétate de vinyle ou en un copolymère d'hydrocarbure fluoré.

## Claims

1. Fire-resistant laminated glass pane assembly, comprising a glass-ceramic pane resistant to high temperatures and being joined, on each of its two faces to a silicate glass pane by transparent intermediate layers, **characterized in that** the glass-ceramic pane having rough light-diffusing surfaces, the transparent intermediate layers between the glass-ceramic pane and the contiguous silicate glass panes consist of a thermoplastic polymer having a high splinter fixation effect corresponding to the refractive index of the glass-ceramic pane, and **in that** the silicate glass panes are tempered thermally.

2. Fire-resistant laminated glass pane assembly according to Claim 1, **characterized in that** the thermally tempered silicate glass panes consist of commercial float glass having a coefficient of thermal expansion of > 8,5 x 1O⁻⁶ K⁻¹ and a softening temperature of about 730°C.

3. Fire-resistant laminated glass pane assembly according to Claim 1, **characterized in that** the thermally tempered glass panes consist of glasses having a coefficient of thermal expansion a20-300 from 6 to 8,5 x 10 ⁻⁶ K⁻¹ and a softening temperature of 750 °C to 830°C.

4. Fire-resistant laminated glass pane assembly according to any one of Claims 1 to 3, **characterized in that** the thermoplastic intermediate layers, consist of polyvinylbutyral,polyurethane, copolymers of ethylene and vinyl acetate or a fluorinated hydrocarbon copolymer.

## Patentansprüche

1. Feuerwiderstandsfähige Verbundglasscheibe, welche eine gegenüber hohen Temperaturen beständige Glaskeramikscheibe umfasst, die auf beiden Seiten über transparente Zwischenschichten jeweils mit einer Silicatglasscheibe verbunden ist, **dadurch gekennzeichnet, dass** die Glaskeramikscheibe raue Oberflächen besitzt, die das Licht von den zwischen der Glaskeramikscheibe und den angrenzenden Silicatglasscheiben befindlichen transparenten Zwischenschichten streuen, die aus einem Thermoplast mit starker Haftwirkung für Glassplitter und einem dem Brechungsindex der Glaskeramikscheibe entsprechenden Brechungsindex bestehen, und dass die Silicatglasscheiben thermisch vorgespannt sind.

2. Feuerwiderstandsfähige Verbundglasscheibe nach Anspruch 1, **dadurch gekennzeichnet, dass** die thermisch vorgespannten Silicatglasscheiben aus einem handelsüblichen Floatglas mit einem Wärmeausdehnungskoeffizienten von > 8,5·10⁻⁶K⁻¹ und einer Erweichungstemperatur von etwa 730 °C bestehen.

3. Feuerwiderstandsfähige Verbundglasscheibe nach Anspruch 1, **dadurch gekennzeichnet, dass** die thermisch vorgespannten Glasscheiben aus einem Glas mit einem Wärmeausdehnungskoeffizienten α₂₀₋₃₀₀ von 6 bis 8,5·10⁻⁶K⁻¹ und einer Erweichungstemperatur von 750 bis 830 °C bestehen.

4. Feuerwiderstandsfähige Verbundglasscheibe nach einem der Ansprüche 1 bis 3, **dadurch gekennzeichnet, dass** die thermoplastischen Zwischenschichten aus Polyvinylbutyral, Polyurethan, Ethylen-Vinylacetat-Copolymer oder einem Fluorkohlenwasserstoffcopolymer bestehen.
